# EUROPEAN PATENT APPLICATION

(11) **EP 4 428 744 A1**
(43) Date of publication of application: **11.09.2024**
(21) Application number: 23194300.2
(22) Date of filing: 30.08.2023
(51) Int. Cl.: G06F 40/166, G06F 3/0486, G06F 16/93, G06Q 10/06

(54) **INFORMATION PROCESSING SYSTEM, PROGRAM, AND INFORMATION PROCESSING METHOD**

(30) Priority: 08.03.2023 JP 2023035437
(71) Applicant: FUJIFILM Business Innovation Corp., Minato-ku Tokyo (JP)
(72) Inventor: TAKATSUKA, Yohei, Yokohamashi, Kanagawa (JP)
(74) Representative: Kurig, Thomas

(57) **Abstract**

An information processing system includes a processor configured to: in a two-dimensional table in which an attribute value of a first attribute given to a file is used as a header of each row and an attribute value of a second attribute given to the file is used as a header of each column, display statistical information of the file corresponding to the attribute value of the first attribute and the attribute value of the second attribute; receive a row or a column of the two-dimensional table selected by a user and a movement destination of the row or the column; reflect statistical information of a file corresponding to the received row or column of the two-dimensional table in the movement destination and delete the received row or column of the two-dimensional table from the two-dimensional table; and change an attribute value of the file corresponding to the received row or column of the two-dimensional table to an attribute value of the movement destination.

## Description

### BACKGROUND OF THE INVENTION

### (i) Field of the Invention

The present invention relates to an information processing system, a program, and an information processing method.

### (ii) Description of Related Art

For example, in a case in which data is a document, each document is given a plurality of attributes such as a creation date, a creator, a document type, and the number of pages. The use of a two-dimensional table makes it possible to two-dimensionally summarize a large number of documents stored in a database from two viewpoints, that is, from two attributes. For example, the documents are aggregated for each creator and each document type, which makes it possible to two-dimensionally understand the number of documents. For example, it is possible to two-dimensionally understand who (creator) created the document for what purpose (document type) and who created what type of document.

Here, it is assumed that an error is found in the attribute value of the document with reference to a content displayed in the two-dimensional table. For example, JP2000-123029A discloses a technique that divides a data display region into a plurality of tile regions to correspond to each attribute value set in an attribute of data, displays the plurality of tile regions on a display, and moves data whose attribute value is to be changed to another tile region to change the attribute value of the data to an attribute value corresponding to a tile region that is a movement destination.

### SUMMARY OF THE INVENTION

In a case in which the attribute values of a plurality of files that are source data of the statistical information displayed in the two-dimensional table have been corrected, it is troublesome for the user to individually correct the attribute values of the files.

An object of the present invention is to provide a technique that, in a case in which statistical information of a file obtained from an attribute value given to the file is displayed in a two-dimensional table, reduces the time and effort required for correction as compared to a case in which a user individually corrects the attribute values of the files.

According to an aspect of the present disclosure, there is provided an information processing system including a processor configured to: in a two-dimensional table in which an attribute value of a first attribute given to a file is used as a header of each row and an attribute value of a second attribute given to the file is used as a header of each column, display statistical information of the file corresponding to the attribute value of the first attribute and the attribute value of the second attribute; receive a row or a column of the two-dimensional table selected by a user and a movement destination of the row or the column; reflect statistical information of a file corresponding to the received row or column of the two-dimensional table in the movement destination and delete the received row or column of the two-dimensional table from the two-dimensional table; and change an attribute value of the file corresponding to the received row or column of the two-dimensional table to an attribute value of the movement destination.

Further, the processor may be configured to: display a confirmation screen for asking the user whether or not to make the change before changing the attribute value of the file corresponding to the row or the column of the two-dimensional table.

In addition, the processor may be configured to: allow the user to select a file whose attribute value is to be changed from files corresponding to the row or the column of the two-dimensional table.

Furthermore, the processor may be configured to: display a content of the file corresponding to the row or the column of the two-dimensional table.

Moreover, the processor may be configured to: select a row or a column having, as a header, an attribute value, whose similarity to an attribute value as a header of a row or a column that is a candidate for attribute value correction is equal to or greater than a predetermined first threshold value, from the two-dimensional table; and present the selected row or column as a candidate for a movement destination of the row or the column that is the candidate for attribute value correction.

In addition, the row or the column that is the candidate for attribute value correction may be the row or the column of the two-dimensional table selected by the user.

Further, the processor may be configured to: in a case in which the statistical information is the number of files, select the row or the column, in which the number of cells in which the number of files corresponding to the row or the column of the two-dimensional table is 0 is equal to or greater than a predetermined second threshold value, as the column or the row that is the candidate for attribute value correction.

According to another aspect of the present disclosure, there is provided a program causing a computer to implement: a function of displaying statistical information of the file corresponding to the attribute value of the first attribute and the attribute value of the second attribute, in a two-dimensional table in which an attribute value of a first attribute given to a file is used as a header of each row and an attribute value of a second attribute given to the file is used as a header of each column; a function of receiving a row or a column of the two-dimensional table selected by a user and a movement destination of the row or the column; a function of reflecting statistical information of a file corresponding to the received row or column of the two-dimensional table in the movement destination and deleting the received row or column of the two-dimensional table from the two-dimensional table; and a function of changing an attribute value of the file corresponding to the received row or column of the two-dimensional table to an attribute value of the movement destination.

According to still another aspect of the present disclosure, there is provided an information processing method including: displaying statistical information of the file corresponding to the attribute value of the first attribute and the attribute value of the second attribute, in a two-dimensional table in which an attribute value of a first attribute given to a file is used as a header of each row and an attribute value of a second attribute given to the file is used as a header of each column; receiving a row or a column of the two-dimensional table selected by a user and a movement destination of the row or the column; reflecting statistical information of a file corresponding to the received row or column of the two-dimensional table in the movement destination and deleting the received row or column of the two-dimensional table from the two-dimensional table; and changing an attribute value of the file corresponding to the received row or column of the two-dimensional table to an attribute value of the movement destination.

According to a first aspect of the present invention, in a case in which the statistical information of the file obtained from the attribute value given to the file is displayed in the two-dimensional table, it is possible to reduce the time and effort required for correction as compared to a case in which the user individually corrects the attribute values of the files.

According to a second aspect of the present invention, it is possible to ask the user in advance whether or not to change the attribute value of the file.

According to a third aspect of the present invention, it is possible to allow the user to select the file whose attribute value is to be changed.

According to a fourth aspect of the present invention, it is possible for the user to determine whether or not a file is an object whose attribute value is to be changed with reference to the content of the file displayed on the screen.

According to a fifth aspect of the present invention, it is possible for the user to know the movement destination of a row or a column that is a candidate for correction without searching the two-dimensional table.

According to a sixth aspect of the present invention, it is possible to automatically present a candidate for the movement destination in response to the selection of a row or a column from the two-dimensional table by the user.

According to a seventh aspect of the present invention, it is possible to automatically select a row or a column in which the attribute value given to the file is small as the row or the column that is the candidate for correction from the two-dimensional table.

According to an eighth aspect of the present invention, in a case in which the statistical information of the file obtained from the attribute value given to the file is displayed in the two-dimensional table, it is possible to reduce the time and effort required for correction as compared to a case in which the user individually corrects the attribute values of the files.

According to a ninth aspect of the present invention, in a case in which the statistical information of the file obtained from the attribute value given to the file is displayed in the two-dimensional table, it is possible to reduce the time and effort required for correction as compared to a case in which the user individually corrects the attribute values of the files.

### BRIEF DESCRIPTION OF THE DRAWINGS

Exemplary embodiment(s) of the present invention will be described in detail based on the following figures, wherein:
Fig. 1 is a block diagram illustrating an exemplary embodiment of an information processing system according to the exemplary embodiment of the invention;
Fig. 2 is a diagram showing an example of a configuration of a part of attribute information of a document that is held and managed by a data storage unit in Exemplary Embodiment 1;
Fig. 3 is a flowchart illustrating a collective correction process according to Exemplary Embodiment 1;
Fig. 4 is a diagram showing an example of display of a two-dimensional table in Exemplary Embodiment 1;
Fig. 5 is a diagram illustrating an example of a user operation on the two-dimensional table in Exemplary Embodiment 1;
Fig. 6 is a diagram showing an example of setting of data of a document to be corrected by the user operation among the documents held and managed by the data storage unit in Exemplary Embodiment 1;
Fig. 7 is a diagram showing an example of the setting of data after an attribute value of the document shown in Fig. 6 is updated;
Fig. 8 is a diagram showing a two-dimensional table after being updated in response to a user operation on the two-dimensional table shown in Fig. 4;
Fig. 9 is a diagram showing an example of a correction confirmation screen in Exemplary Embodiment 1;
Fig. 10 is a diagram showing another example of the correction confirmation screen in Exemplary Embodiment 1;
Fig. 11 is a diagram showing still another example of the correction confirmation screen in Exemplary Embodiment 1;
Fig. 12 is a block diagram showing an information processing system according to Exemplary Embodiment 2;
Fig. 13A is a flowchart illustrating a correction candidate presentation process according to the present exemplary embodiment;
Fig. 13B is a flowchart continued from Fig. 13A;
Fig. 14 is a diagram showing a candidate for correction candidate columns selected from the two-dimensional table in the correction candidate presentation process in the present exemplary embodiment;
Fig. 15 is a diagram showing a set of a correction candidate column and a correct column selected from the two-dimensional table in the correction candidate presentation process in the present exemplary embodiment; and
Fig. 16 is a diagram showing an example of display of a screen in a case in which the correction candidate column and the correct column are presented in the correction candidate presentation process in the present exemplary embodiment.

### DETAILED DESCRIPTION OF THE INVENTION

Hereinafter, exemplary embodiments of the present invention will be described with reference to the drawings.

### Exemplary Embodiment 1.

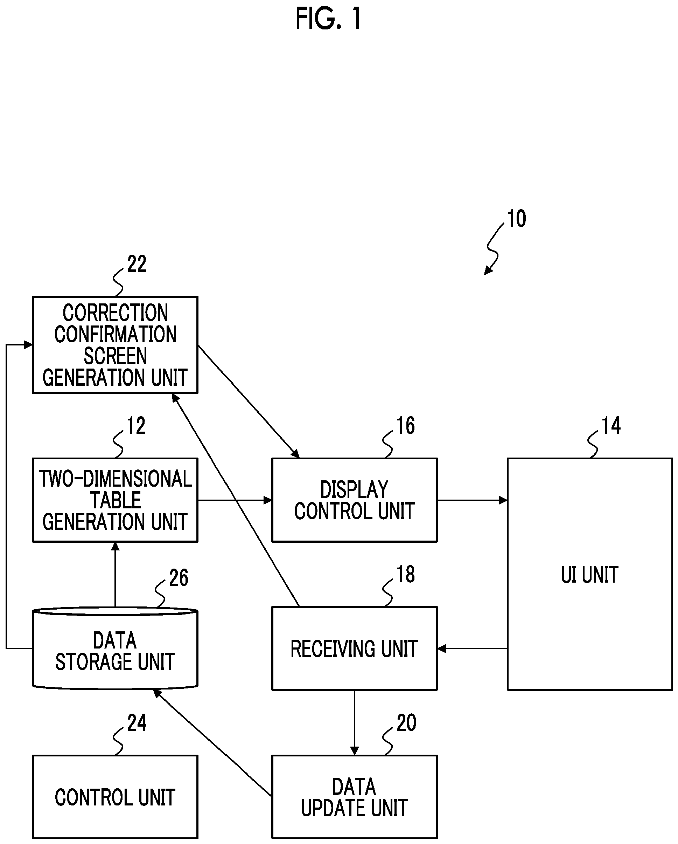

Fig. 1 is a block diagram illustrating an exemplary embodiment of an information processing system according to the exemplary embodiment of the invention. The information processing system according to the present exemplary embodiment can be implemented by one or more information processing apparatuses. In the following description, a case in which the information processing system is implemented by one information processing apparatus will be described as an example.

An information processing apparatus 10 according to the present exemplary embodiment can be implemented by an existing general-purpose hardware configuration such as a personal computer (PC). That is, the information processing apparatus 10 according to the present exemplary embodiment can be implemented by a configuration including a user interface that includes a CPU, a storage means, such as a ROM, a RAM, and a hard disk drive (HDD), a communication means, such as a network interface, an input means, such as a mouse and a keyboard, and a display means such as a display.

As illustrated in Fig. 1, the information processing apparatus 10 according to the present exemplary embodiment includes a two-dimensional table generation unit 12, a user interface unit 14, a display control unit 16, a receiving unit 18, a data update unit 20, a correction confirmation screen generation unit 22, a control unit 24, and a data storage unit 26. Components that are not used for the description of the present exemplary embodiment are not shown in Fig. 1.

The data storage unit 26 stores a data file of an electronic document (hereinafter, also simply referred to as a "document") that is source data of statistical information to be displayed in the two-dimensional table.

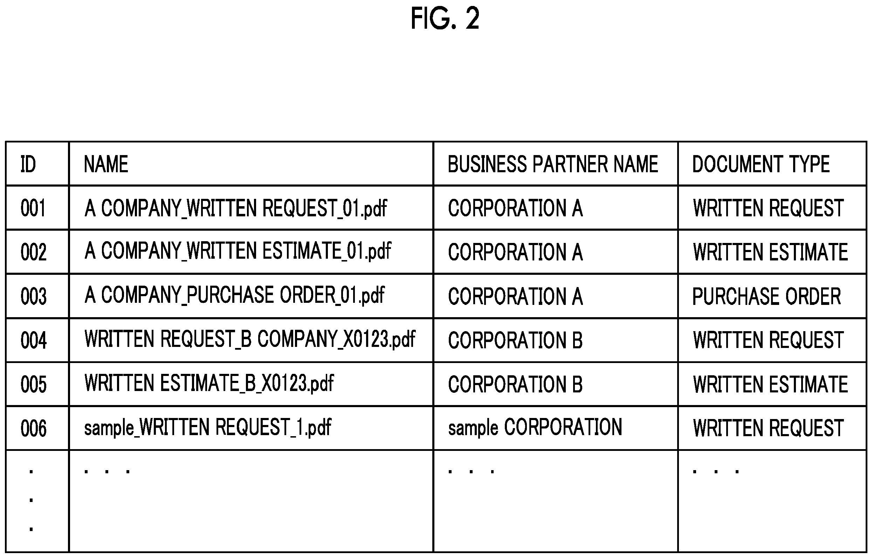

Fig. 2 is a diagram showing an example of a configuration of a part of attribute information of a document held and managed by the data storage unit 26. An "ID" is given as identification information to each document, and a name of the document ("name"), a company name of a business partner company that is a transmission destination of the document ("business partner name"), and a document type of the document are registered in association with each ID. In addition, the data storage unit 26 may include attribute information other than the attribute information given as an example in Fig. 2 or may include storage destination information for specifying a storage destination of the document instead of the document.

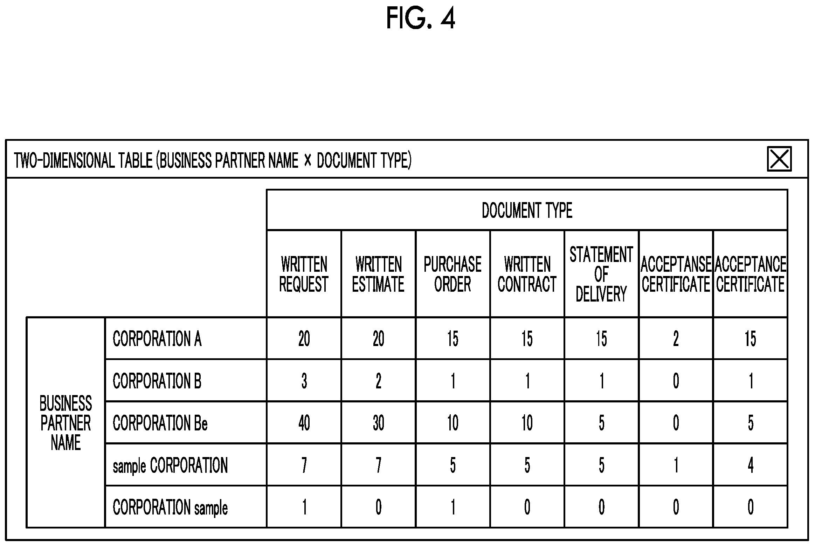

Here, the "two-dimensional table" means a two-dimensional table in which the original data (in the case of the present exemplary embodiment, the "document") has been summarized from two viewpoints. In the case of the present exemplary embodiment, the document is treated as data, and the attribute information given to the document is used as the viewpoint. Therefore, the two-dimensional table according to the present exemplary embodiment is generated such that an attribute value of a first attribute given to the document is used as a header of each row and an attribute value of a second attribute given to the document is used as a header of each column. The first attribute and the second attribute are different types of attribute information. As will be described below, in the present exemplary embodiment, as shown in an example of the display of a screen in Fig. 4 and the like, the "business partner name" is used as the first attribute, and the "document type" is used as the second attribute.

Further, in the case of the present exemplary embodiment, the "statistical information" of the file to be displayed in the two-dimensional table is the number of documents. For example, the number of documents of "written requests" having "Corporation A" as a business partner is as shown in the corresponding cell. The total number of documents (hereinafter, also referred to as the "aggregated number of documents") which is the result of aggregating the documents managed by the data storage unit 26 for each business partner name and for each document type is 20. In addition, in the present exemplary embodiment, the aggregated number of documents is used as the statistical information. However, the aggregated number of documents is not necessarily used. For example, other numerical data, such as an average value or a ratio, may be used. In addition, the magnitude of the number may be represented by text, such as "large", "medium", and "small", or symbols.

Returning to Fig. 1, the two-dimensional table generation unit 12 aggregates the documents managed by the data storage unit 26 for each first attribute and each second attribute as described above to generate the two-dimensional table. The user interface (UI) unit 14 is implemented by the input means and the display means in the information processing apparatus 10, displays the two-dimensional table or the like, and allows the user to perform an input operation on the two-dimensional table or the like displayed on the screen. The display control unit 16 controls the display of the user interface unit 14. The receiving unit 18 receives an operation of the user interface unit 14 by the user. The data update unit 20 updates the attribute value of the corresponding document set in the data storage unit 26 in response to the user operation received by the receiving unit 18. In a case in which a user operation for a collective correction instruction is received by the receiving unit 18, the correction confirmation screen generation unit 22 generates a correction confirmation screen. The control unit 24 controls the operations of the components 12 to 22 in the present exemplary embodiment.

Each of the components 12 to 24 of the information processing apparatus 10 is implemented by a cooperative operation of a computer that constitutes the information processing apparatus 10 and a program that is operated by a CPU provided in the computer. In addition, the data storage unit 26 is implemented by the HDD provided in the information processing apparatus 10. Alternatively, the RAM or an external storage means may be used via a network.

In the present exemplary embodiment, description will be made assuming that the information processing system is implemented by one computer. However, an information processing system in which the components 12 to 24 are distributed and formed in a plurality of computers connected by a communication network may be used. The "system" in the present exemplary embodiment includes both a system that is configured by a plurality of apparatuses and a system that is configured by a single apparatus.

Further, the program used in the present exemplary embodiment can be provided by a communication means. In addition, the program can be stored in a computer-readable recording medium, such as a CD-ROM or a USB memory, and then provided. The programs provided from the communication means or the recording medium are installed in the computer, and the CPU of the computer sequentially executes the programs to implement various processes.

Next, an operation according to the present exemplary embodiment will be described.

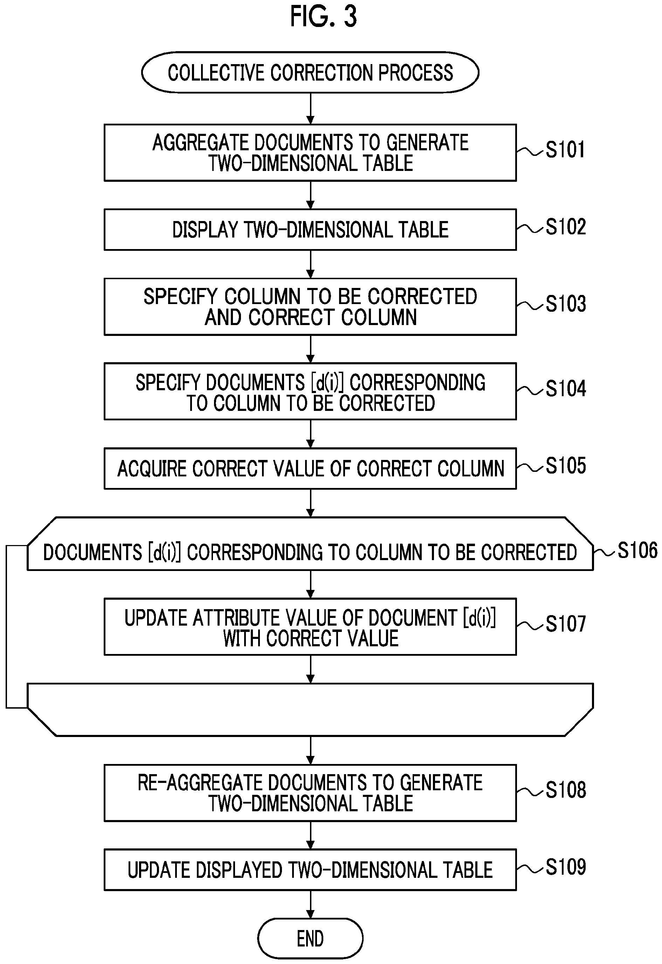

The present exemplary embodiment is characterized in that the attribute values of the selected documents can be collectively corrected in response to the user operation on the two-dimensional table displayed on the screen. Hereinafter, a collective correction process according to the present exemplary embodiment will be described with reference to a flowchart shown in Fig. 3.

First, the two-dimensional table generation unit 12 aggregates the documents managed by the data storage unit 26 for each first attribute and each second attribute to generate a two-dimensional table (Step S101). The display control unit 16 directs the user interface unit 14 to display the generated two-dimensional table on the screen (Step S102). Fig. 4 shows an example of the display of the generated two-dimensional table on the screen.

As described above, in the present exemplary embodiment, the two-dimensional table in which the attribute value of the first attribute "business partner name" is the header of the row and the attribute value of the second attribute "document type" is the header of the column is generated and displayed. The total number of documents to which the attribute value of the first attribute and the attribute value of the second attribute are given is shown as an aggregate value in each cell at a position where the row and the column intersect.

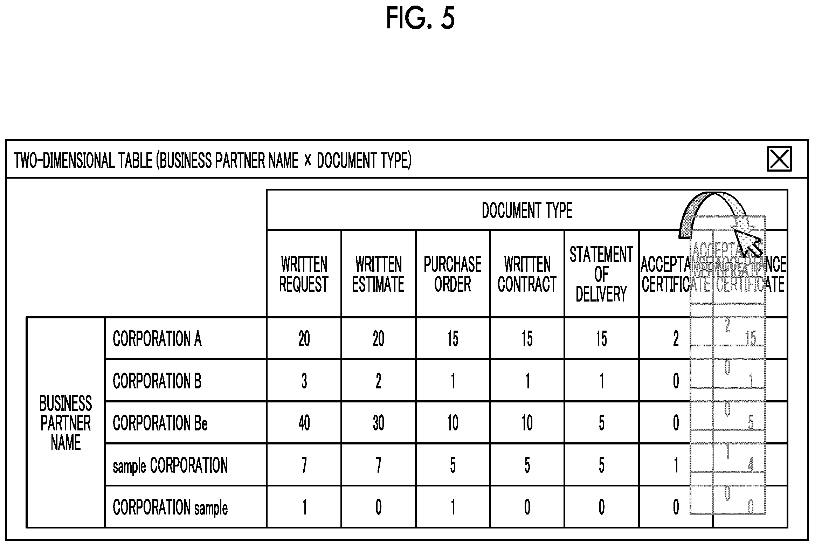

It is assumed that the user finds an error in the attribute value given to the document with reference to the two-dimensional table. In this case, the user performs a predetermined operation to input an instruction for collective correction for correcting the error found. In the present exemplary embodiment, a drag-and-drop operation is used as the predetermined operation. Fig. 5 shows an example in which the user notices that an attribute value "acceptance certificate" should have been correctly given to a document having an attribute value "acceptanse certificate" in the column of the two-dimensional table and drags and drops the column of the "acceptanse certificate" (hereinafter, referred to as a "column to be corrected") to be corrected to a correct column of the "acceptance certificate" (hereinafter, referred to as a "correct column").

The receiving unit 18 receives this drag-and-drop operation (Step S103). Then, the data update unit 20 specifies the column to be corrected, which is a movement source of the drag-and-drop operation, and the correct column, which is a movement destination of the drag-and-drop operation, from the user operation received by the receiving unit 18 (Step S103).

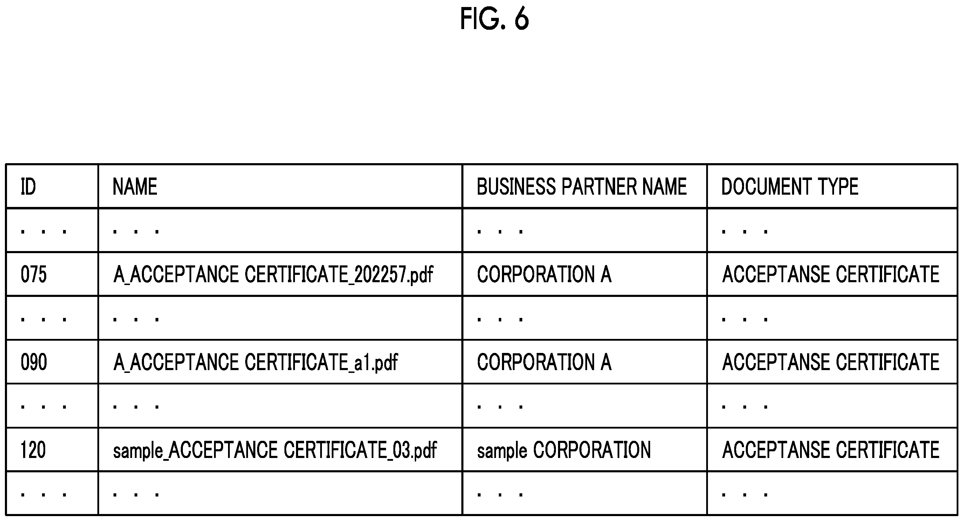

However, Fig. 6 shows three documents (ID = 075, 090, and 120) in which the "acceptanse certificate" is set as the document type among the documents registered in the data storage unit 26. The data update unit 20 specifies the documents, whose document type is the "acceptanse certificate" and which have IDs of 075, 090, and 120, as documents d(i) corresponding to the column to be corrected, with reference to the data storage unit 26 (Step S104).

In addition, the data update unit 20 acquires a correct attribute value (hereinafter, a "correct value") given to each document in the correct column (Step S105). Then, for each document d(i) corresponding to the column to be corrected, the data update unit 20 repeatedly performs a process of updating the attribute value "acceptanse certificate" of the document attribute of the document set in the data storage unit 26 to the correct value, that is, the "acceptance certificate" (Steps S106 and S107).

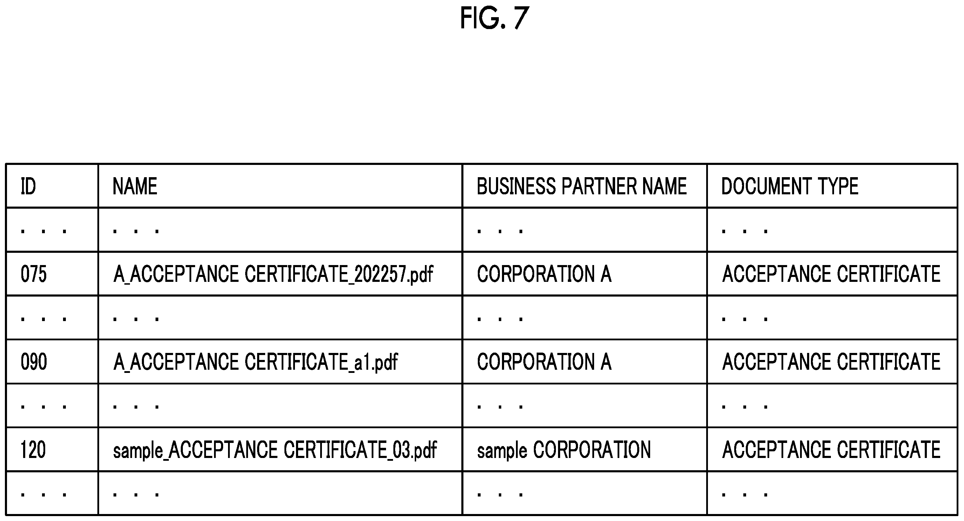

Fig. 7 is a diagram showing an example of the setting of data whose attribute value has been changed by the update process among the documents set in the data storage unit 26. As shown in Fig. 7, the data update unit 20 updates the attribute value by changing the attribute value of the column which is the movement source in the drag-and-drop operation, that is, the attribute value "acceptanse certificate" of the document type of the document (ID = 075, 090, and 120) corresponding to the column to be corrected among the documents set in the data storage unit 26 to the attribute value of the column which is the movement destination, that is, the attribute value "acceptance certificate" of the document type in the correct column.

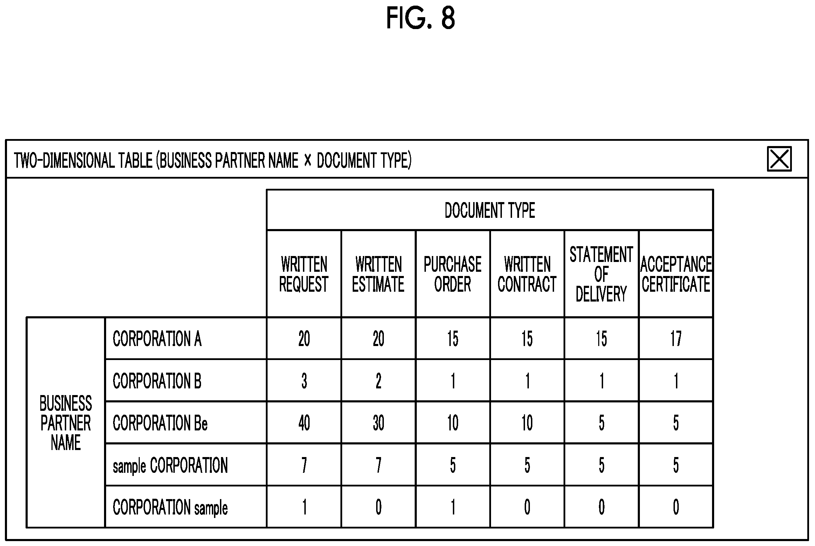

In a case in which the update of the data is ended, the two-dimensional table generation unit 12 re-aggregates the number of documents managed by the data storage unit 26 using the same method as that in Step S 101 to generate a two-dimensional table (Step S108). The display control unit 16 directs the user interface unit 14 to display the generated two-dimensional table on the screen (Step S109). Fig. 8 shows an example of the display of the generated two-dimensional table on the screen.

As shown in Fig. 8, in the present exemplary embodiment, the attribute values of the documents managed by the data storage unit 26 are collectively corrected in response to the drag-and-drop operation of the user. On the display screen, the aggregated number of documents in each cell in the column to be corrected is merged with the aggregated number of documents in each corresponding cell in the correct column to be reflected therein, and the column to be corrected which is the movement source is deleted by this collective correction. According to the present exemplary embodiment, the attribute values of the document types of the documents corresponding to the column to be corrected can be collectively corrected as described above. Therefore, it is possible to reduce the time and effort required for correction.

Meanwhile, in the above description, the information processing apparatus 10 automatically collectively corrects the attribute values of the documents corresponding to the column to be corrected in response to the user operation. However, it is not possible to check in advance the document whose attribute value is to be corrected, using only the two-dimensional table. Therefore, before the attribute value of the document corresponding to the column to be corrected in the two-dimensional table is automatically changed, a correction confirmation screen that asks the user who has performed the drag-and-drop operation whether or not to make the change is displayed to inform the user in advance of the document to be corrected.

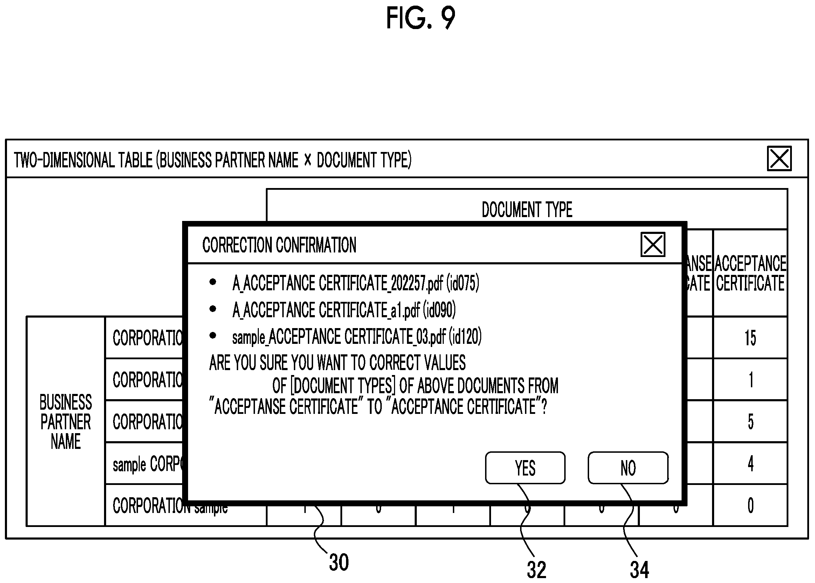

Fig. 9 is a diagram illustrating an example of the correction confirmation screen in the present exemplary embodiment. Fig. 9 illustrates a correction confirmation screen 30 on which a list of the document names of the documents to be corrected illustrated in Fig. 6 is displayed. In a case in which the receiving unit 18 receives a user operation for a collective correction instruction, that is, a drag-and-drop operation, the correction confirmation screen generation unit 22 extracts the document names of the documents corresponding to the column to be corrected with reference to the data storage unit 26 and generates the correction confirmation screen including a list of the extracted document names. The display control unit 16 displays the correction confirmation screen generated by the correction confirmation screen generation unit 22.

Further, in the present exemplary embodiment, an example in which the correction confirmation screen is displayed to be superimposed on the two-dimensional table has been described. However, a method for displaying the correction confirmation screen is not limited thereto. For example, the correction confirmation screen may be displayed in a window different from the two-dimensional table.

The user selects a "Yes" button 32 in a case in which the user wants to change the document type of the document to be corrected with reference to the correction confirmation screen 30. Then, the attribute value of the document to be corrected is changed in the same manner as described above, and the two-dimensional table is updated as shown in Fig. 8. On the other hand, in a case in which the user does not want to change the document type of the document to be corrected, the user selects a "No" button 34. Then, the attribute value of the document to be corrected is not changed. In addition, the content displayed in the two-dimensional table is maintained as shown in Fig. 4.

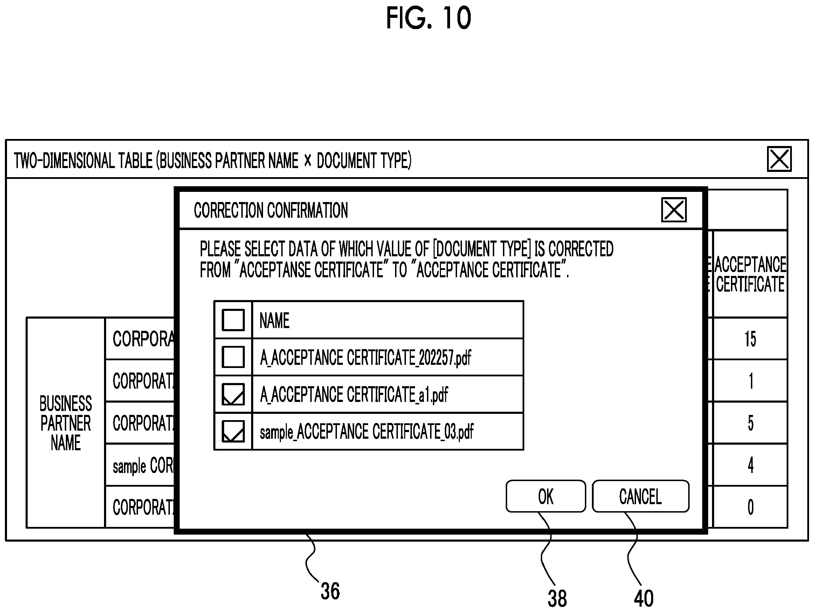

Fig. 10 is a diagram showing another example of the correction confirmation screen in the present exemplary embodiment. Fig. 10 shows a correction confirmation screen 36 in which a list of the document names of the documents to be corrected is displayed as in Fig. 9 and the user can individually select the document whose attribute value is to be actually changed. The user checks a check box corresponding to the document to be corrected from the correction confirmation screen 36 shown in Fig. 10 and then selects an "OK" button 38. Then, the data update unit 20 updates only the attribute value of the selected document. In addition, in a case in which a "Cancel" button 40 is selected, the attribute value of the document to be corrected is not changed as in the case in which the "No" button 34 is selected in Fig. 9. In addition, the content displayed in the two-dimensional table is maintained as shown in Fig. 4.

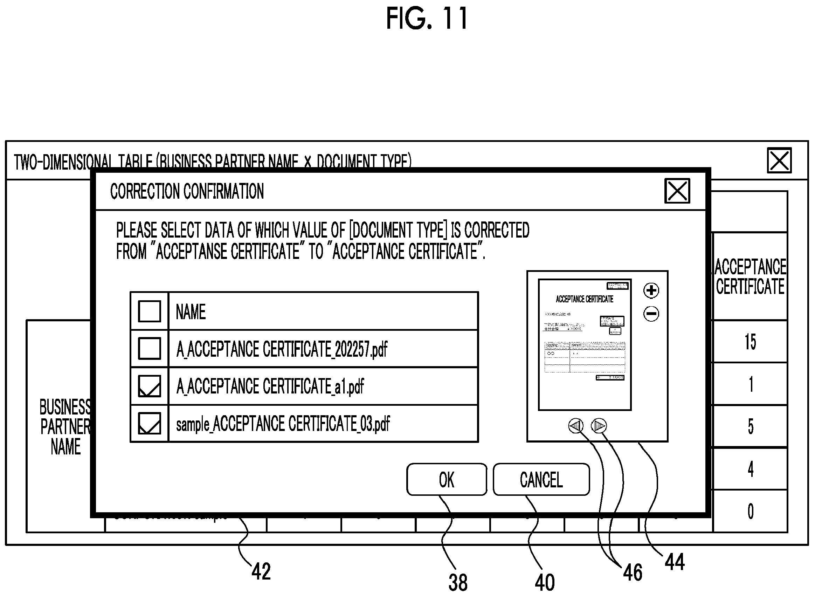

Fig. 11 is a diagram showing still another example of the correction confirmation screen in the present exemplary embodiment. As in Fig. 10, Fig. 11 shows a correction confirmation screen 42 in which the document to be corrected can be individually selected from a list of the document names of the documents that are candidates for correction. Further, the correction confirmation screen 42 shown in Fig. 11 is provided with a display region 44 for displaying the content of the document that is the candidate for correction. The document to be displayed can be selected by operating arrow buttons 46. In addition, in the present exemplary embodiment, an example in which the display region 44 for the document is included in the correction confirmation screen 42 and displayed has been described. However, the present invention is not limited thereto. For example, the display region 44 for the document may be displayed in a window different from the correction confirmation screen 42. Further, Fig. 11 shows an example in which the content of only one document is displayed in the display region 44. However, a plurality of documents may be displayed in the display region 44 at the same time. The display aspect of the document is not limited to the example of the display shown in Fig. 11 and may be appropriately determined according to, for example, the number of documents to be corrected and a screen size.

In addition, in the above description, the collective correction of the attribute values which is characteristic of the present exemplary embodiment has been described using the column of the two-dimensional table. However, it is also possible to perform the collective correction on the rows of the two-dimensional table in response to a drag-and-drop operation from a row which is a movement source to a row which is a movement destination.

### Exemplary Embodiment 2.

In Exemplary Embodiment 1, it is possible to collectively correct the attribute values of the documents corresponding to the row or the column, which is the movement source, to the attribute values of the row or the column, which is the movement destination, in response to a predetermined user operation (specifically, a drag-and-drop operation). In the present exemplary embodiment, instead of allowing the user to designate the row or the column which is the movement destination and the row or the column which is the movement source, it is possible to present the user with candidates for the row or column to be corrected with reference to the aggregated number of documents in each cell of the two-dimensional table.

Further, in the present exemplary embodiment, among the rows and columns of the two-dimensional table, the columns will be described as representatives. Of course, as in Exemplary Embodiment 1, a process on the columns in the present exemplary embodiment can be applied to the rows.

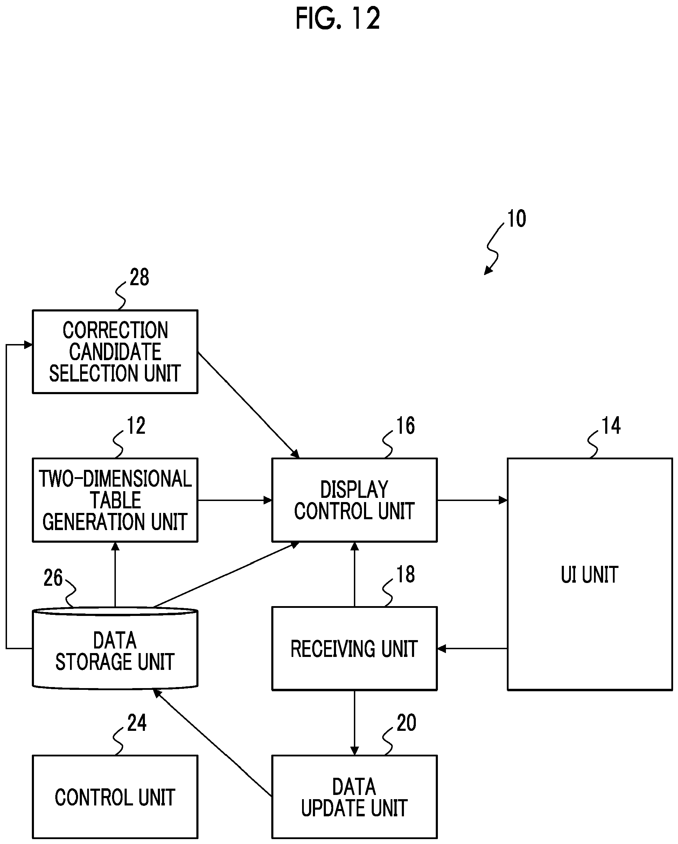

Fig. 12 is a block diagram showing an information processing system according to the present exemplary embodiment. In addition, the same components as the components in Exemplary Embodiment 1 are denoted by the same reference numerals, and the description thereof will be omitted as appropriate. Further, in the present exemplary embodiment, a case in which the information processing system is formed by one information processing apparatus 10 will be described as an example.

An information processing apparatus 10 according to the present exemplary embodiment is different from that according to Exemplary Embodiment 1 in that the information processing apparatus 10 has a correction candidate selection unit 28 instead of the correction confirmation screen generation unit 22. The correction candidate selection unit 28 selects candidates for the movement source and the movement destination without allowing the user to designate the column to be corrected that is the movement source and the correct column that is the movement destination, which have been designated by the user in Exemplary Embodiment 1. The correction candidate selection unit 28 is implemented by a cooperative operation of a computer constituting the information processing apparatus 10 and a program that runs on a CPU provided in the computer.

Next, an operation according to the present exemplary embodiment will be described.

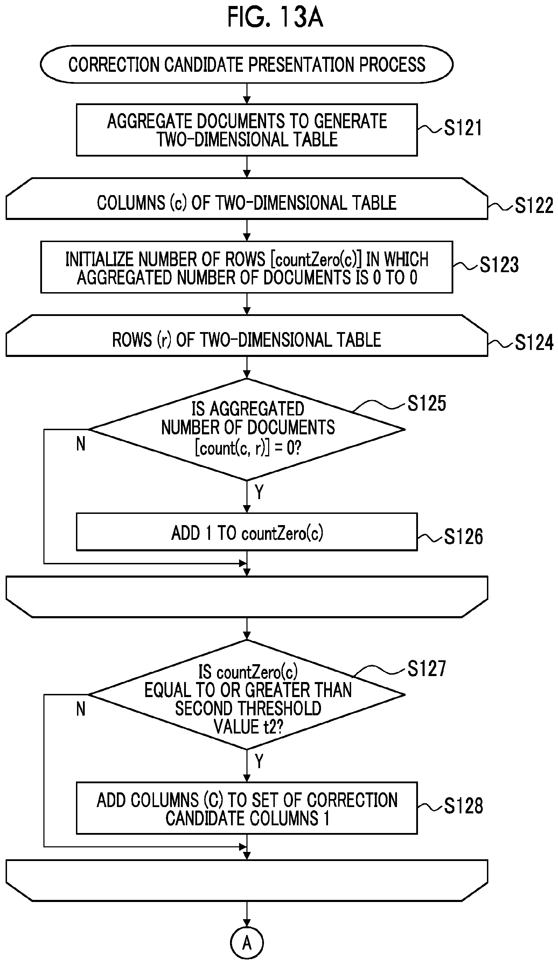

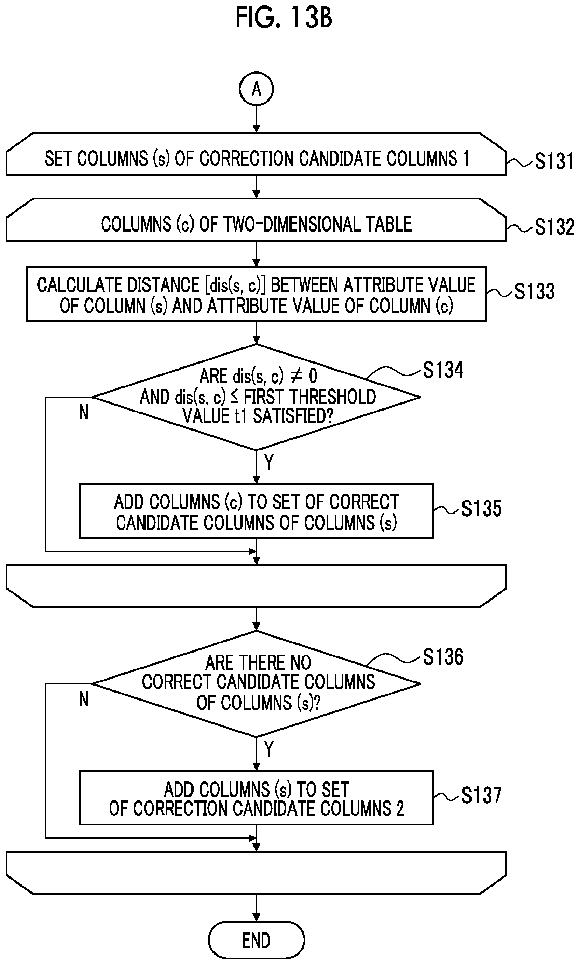

A process of presenting the candidates for correction in the present exemplary embodiment can be broadly divided into a process of selecting a candidate for the movement source, that is, a candidate for the column to be corrected (hereinafter, referred to as a "correction candidate column") and a process of selecting a candidate for the movement destination, that is, a candidate for a column as a correct answer (hereinafter, referred to as a "correct column"). Fig. 13A is a flowchart showing the former, and Fig. 13B is a flowchart showing the latter. First, the process of selecting the candidate for correction candidate column will be described with reference to the flowchart shown in Fig. 13A.

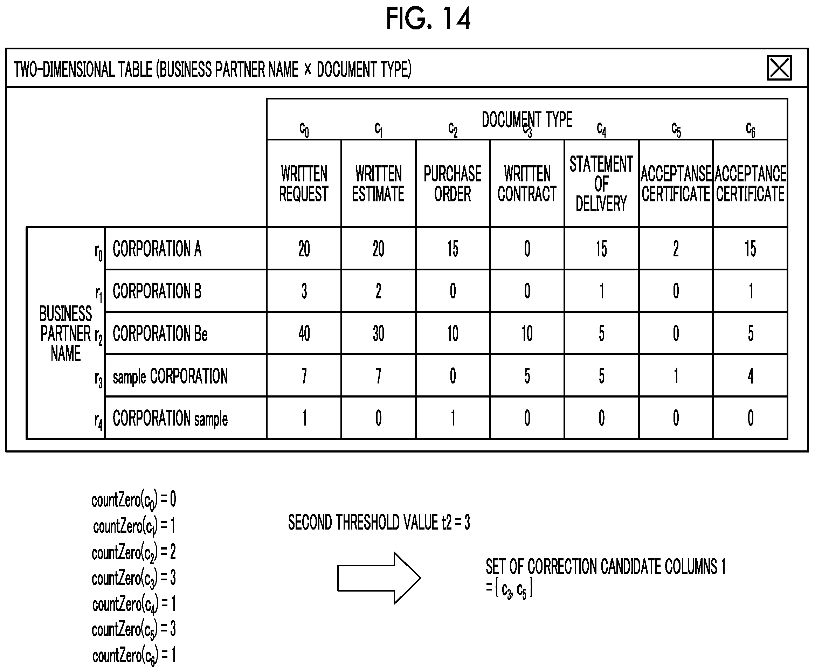

First, the two-dimensional table generation unit 12 aggregates the documents managed by the data storage unit 26 for each first attribute and each second attribute to generate a two-dimensional table as in Exemplary Embodiment 1 (Step S121). Fig. 14 shows an example of the display of the generated two-dimensional table on the screen. In Fig. 14, symbols r₀ to r₄ and c₀ to c₆ are given to each row and each column, respectively. In addition, as described above, here, the description will be focused on the columns.

The correction candidate selection unit 28 repeats the following process on each of the columns c₀ to ce in order to select the candidate for correction candidate column.

First, the correction candidate selection unit 28 initializes countZero(c), which is a counter of the column to be processed, to 0 (Step S123). Then, the correction candidate selection unit 28 adds 1 to the counter countZero(c) (Step S126) in a case in which a cell value corresponding to each row of the two-dimensional table in the column c (c = c₀ to c₆) to be processed is 0 (Y in Step S125) and does not perform the addition in a case in which the cell value is not 0 (N in Step S125). The result of counting the number of cell values of 0 in each column is shown on the lower left side of the two-dimensional table in Fig. 14. For example, in the column c₃, since each of the cell values in three rows r₀, r₁, and r₄ is 0, countZero(c₃) is 3.

Then, the correction candidate selection unit 28 compares the counter value calculated by the above process with a predetermined second threshold value t2. The second threshold value t2 is a threshold value for determining whether or not to select the column c as the candidate for correction candidate column. Here, in a case in which the counter countZero(c) is equal to or greater than the second threshold value t2 (Y in Step S127), the correction candidate selection unit 28 selects the column as the candidate for correction candidate column and adds the column to a set of correction candidate columns 1 (Step S128). On the other hand, otherwise (N in Step S127), the correction candidate selection unit 28 does not select the column as the candidate for correction candidate column.

According to the numerical example of each cell in the two-dimensional table shown in Fig. 14, since both the counter values of the columns c₃ and the column c₅ are 3 and the second threshold value t2 is equal to or greater than 3, the columns are selected as the candidate for correction candidate columns and are registered in the set of the correction candidate columns 1 indicating that the columns are the candidate for correction candidate columns. The columns included in the set of the correction candidate columns 1 resulting from the above process are shown on the lower right side of the two-dimensional table in Fig. 14.

Then, the process of selecting a candidate for the correct column of the correction candidate column will be described with reference to the flowchart shown in Fig. 13B.

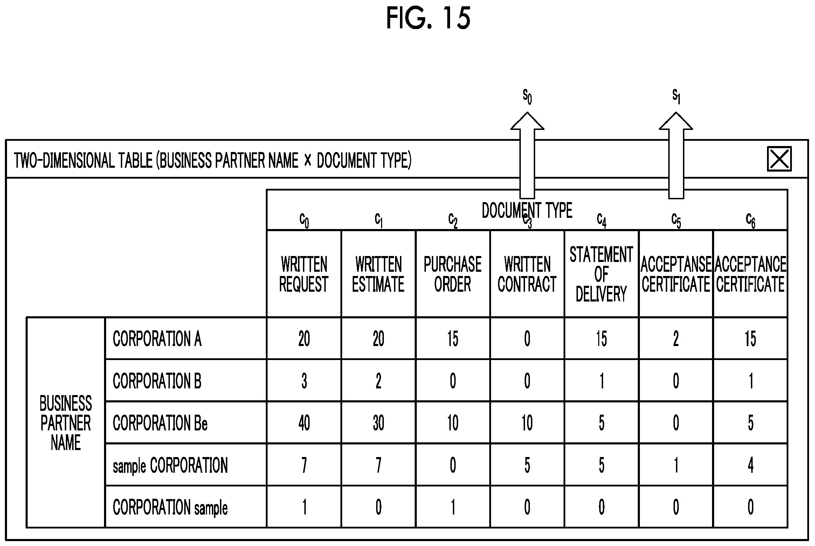

Fig. 15 shows the same two-dimensional table as Fig. 14. Fig. 15 shows that symbols s₀ and s₁ are newly given to the columns c₃ and c₅ (hereinafter, referred to as "set columns") belonging to the set of the correction candidate columns 1 in the above process, respectively. The correction candidate selection unit 28 performs the following processing on each set column s (Step S131).

First, the correction candidate selection unit 28 calculates a distance dis(s, c) between the attribute value of the set column s (s = s₀ and si) to be processed and the attribute value of each of the columns c₀ to c₆ included in the two-dimensional table (Step S133). An existing method may be used to calculate the distance between the attribute values. In the present exemplary embodiment, the Levenshtein distance is used.

Then, the correction candidate selection unit 28 compares the distance calculated by the above process with a predetermined first threshold value t1. The first threshold value t1 is a threshold value for determining which column is selected as the candidate for the correct column. Here, in a case in which the distance dis(s, c) is not 0 and is equal to or less than the first threshold value t1 (Y in Step S134), the correction candidate selection unit 28 selects the column c as the candidate for the correct column of the set column s and adds the selected column to a set of correct candidate columns (Step S135). On the other hand, otherwise (N in Step S134), the column is not selected as the correct candidate columns.

In addition, a distance of 0 means that the attribute value of the column is equal to the attribute value of the set column s, that is, means the result of comparison with the set column s itself. Therefore, the distance of 0 is excluded.

Meanwhile, in the present exemplary embodiment, the distance is used as an index indicating the similarity between two attribute values. That is, the smaller the distance between the two attribute values, the larger the similarity between the two attribute values. Therefore, the distance and the similarity have an inverse magnitude relationship. Therefore, the fact that the distance is equal to or less than the first threshold value t1 is equivalent to the fact that the similarity is equal to or greater than the first threshold value t1. Then, in the present exemplary embodiment, in a case in which the distance dis(s, c) between the attribute values is equal to or less than the first threshold value t1, it is determined that the two attribute values are similar.

As described above, in the present exemplary embodiment, in a case in which there are columns in which 0 is set in many cells and which have similar attribute values, a column in which 0 is set in many cells is selected as the correction candidate column. In addition, in the present exemplary embodiment, the second threshold value t2 is set to determine whether or not 0 is set in many cells in the column, and the first threshold value t1 is set to determine whether or not the attribute values are similar. Further, the determination is performed by the comparison with the threshold value. However, the determination may be performed by a method other than the comparison with the threshold value.

The fact that 0 is set in many cells in the column means that the number of documents having the attribute value set therein is small. Therefore, it is considered that the attribute value is more likely to be erroneously written than the attribute value of the column in which the number of cells in which 0 is set is small. Further, in a case in which the attribute value can be estimated to be erroneously written, it can be said that an attribute value similar to the erroneously written attribute value is more likely to be the correct attribute value to be set, that is, the correct value as the similarity is larger. In addition, the possibility that the attribute value that can be estimated to be erroneously written will be erroneously written also increases. In the present exemplary embodiment, the correction candidate column and the candidate for the correct column are selected on the basis of this idea.

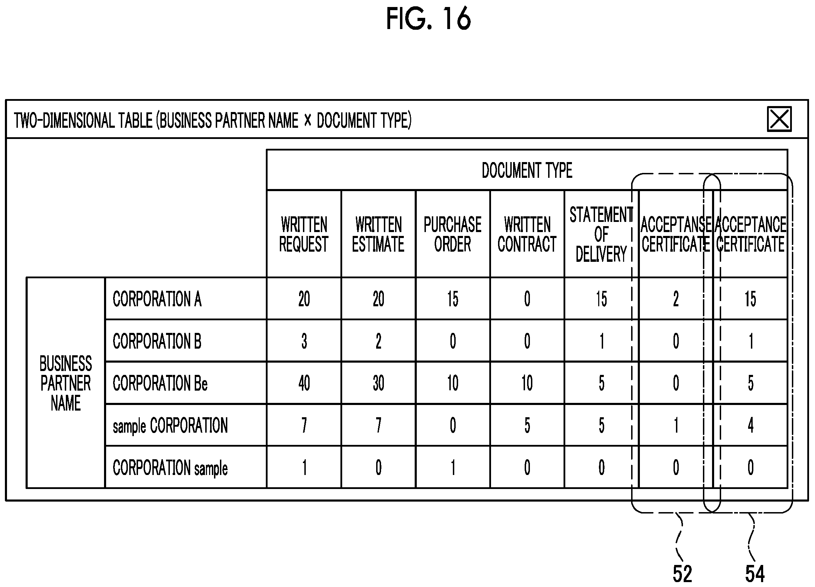

Fig. 16 is a diagram showing an example of the display of a two-dimensional table for presenting the selection result of the candidate for correction by the correction candidate selection unit 28 in the present exemplary embodiment. The display control unit 16 displays the two-dimensional table such that a set of the correction candidate column and the correct column selected by the correction candidate selection unit 28 can be discriminated. Fig. 16 shows an example of the display of the two-dimensional table in which a correction candidate column 52 is surrounded by a broken line and a correct column 54 is surrounded by a one-dot chain line. Of course, the form in which the correction candidate column 52 and the correct column 54 are displayed to be discriminable is not limited to this example.

In a case in which the set of the correction candidate column 52 and the correct column 54 is known, the user can perform an operation of dragging and dropping the correction candidate column 52 as the column to be corrected to the correct column 54 as a correct answer as in Exemplary Embodiment 1 to collectively correct the attribute values of the documents corresponding to the correction candidate column 52 to the correct attribute values.

Further, in the present exemplary embodiment, for convenience, a case in which the correction candidate column 52 and the correct column 54 have a one-to-one relationship has been described as an example. However, the correction candidate column 52 and the correct column 54 may have a one-to-many relationship, a many-to-one relationship, multiple one-to-one relationships, and a many-to-many relationship. In this case, the display control unit 16 displays the two-dimensional table such that the set of the correction candidate column 52 and the correct column 54 can be discriminated by a display aspect, such as a line type and a color, or text information specifying the set.

Further, in the present exemplary embodiment, both the correction candidate column and the correct column are automatically selected. However, a configuration that allows the user selects the correction candidate column from the two-dimensional table may be used. In this case, the correction candidate selection unit 28 can automatically select a correct column corresponding to the correction candidate column selected by the user and present the user with the correct column of the correction candidate column selected by the user. As described above, in a case in which there are a plurality of sets of the correction candidate columns and the correct columns, it is possible to perform the attribute value correction process with a focus on one correction candidate column.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### (Supplementary Note)

(((1))) An information processing system comprising:
   a processor configured to:
   in a two-dimensional table in which an attribute value of a first attribute given to a file is used as a header of each row and an attribute value of a second attribute given to the file is used as a header of each column, display statistical information of the file corresponding to the attribute value of the first attribute and the attribute value of the second attribute;
   receive a row or a column of the two-dimensional table selected by a user and a movement destination of the row or the column;
   reflect statistical information of a file corresponding to the received row or column of the two-dimensional table in the movement destination and delete the received row or column of the two-dimensional table from the two-dimensional table; and
   change an attribute value of the file corresponding to the received row or column of the two-dimensional table to an attribute value of the movement destination.
(((2))) The information processing system according to ((((1))), wherein the processor is configured to:
   display a confirmation screen for asking the user whether or not to make the change before changing the attribute value of the file corresponding to the row or the column of the two-dimensional table.
(((3))) The information processing system according to (((1))), wherein the processor is configured to:
   allow the user to select a file whose attribute value is to be changed from files corresponding to the row or the column of the two-dimensional table.
(((4))) The information processing system according to (((2))), wherein the processor is configured to:
   display a content of the file corresponding to the row or the column of the two-dimensional table.
(((5))) The information processing system according to (((1))), wherein the processor is configured to:
   select a row or a column having, as a header, an attribute value, whose similarity to an attribute value as a header of a row or a column that is a candidate for attribute value correction is equal to or greater than a predetermined first threshold value, from the two-dimensional table; and
   present the selected row or column as a candidate for a movement destination of the row or the column that is the candidate for attribute value correction.
(((6))) The information processing system according to (((5))),
   wherein the row or the column that is the candidate for attribute value correction is the row or the column of the two-dimensional table selected by the user.
(((7))) The information processing system according to (((5))), wherein the processor is configured to:
   in a case in which the statistical information is the number of files, select the row or the column, in which the number of cells in which the number of files corresponding to the row or the column of the two-dimensional table is 0 is equal to or greater than a predetermined second threshold value, as the column or the row that is the candidate for attribute value correction.
(((8))) A program causing a computer to implement:
   a function of displaying statistical information of the file corresponding to the attribute value of the first attribute and the attribute value of the second attribute, in a two-dimensional table in which an attribute value of a first attribute given to a file is used as a header of each row and an attribute value of a second attribute given to the file is used as a header of each column;
   a function of receiving a row or a column of the two-dimensional table selected by a user and a movement destination of the row or the column;
   a function of reflecting statistical information of a file corresponding to the received row or column of the two-dimensional table in the movement destination and deleting the received row or column of the two-dimensional table from the two-dimensional table; and
   a function of changing an attribute value of the file corresponding to the received row or column of the two-dimensional table to an attribute value of the movement destination.

According to the aspect (((1))), in a case in which the statistical information of the file obtained from the attribute value given to the file is displayed in the two-dimensional table, it is possible to reduce the time and effort required for correction as compared to a case in which the user individually corrects the attribute values of the files.

According to the aspect (((2))), it is possible to ask the user in advance whether or not to change the attribute value of the file.

According to the aspect (((3))), it is possible to allow the user to select the file whose attribute value is to be changed.

According to the aspect (((4))), it is possible for the user to determine whether or not a file is an object whose attribute value is to be changed with reference to the content of the file displayed on the screen.

According to the aspect (((5))), it is possible for the user to know the movement destination of a row or a column that is a candidate for correction without searching the two-dimensional table.

According to the aspect (((6))), it is possible to automatically present a candidate for the movement destination in response to the selection of a row or a column from the two-dimensional table by the user.

According to the aspect (((7))), it is possible to automatically select a row or a column in which the attribute value given to the file is small as the row or the column that is the candidate for correction from the two-dimensional table.

According to the aspect (((8))), in a case in which the statistical information of the file obtained from the attribute value given to the file is displayed in the two-dimensional table, it is possible to reduce the time and effort required for correction as compared to a case in which the user individually corrects the attribute values of the files.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information processing apparatus
12: two-dimensional table generation unit
14: user interface (UI) unit
16: display control unit
18: receiving unit
20: data update unit
22: correction confirmation screen generation unit
24: control unit
26: data storage unit
28: correction candidate selection unit

## Claims

1. An information processing system comprising:
a processor configured to:
in a two-dimensional table in which an attribute value of a first attribute given to a file is used as a header of each row and an attribute value of a second attribute given to the file is used as a header of each column, display statistical information of the file corresponding to the attribute value of the first attribute and the attribute value of the second attribute;
receive a row or a column of the two-dimensional table selected by a user and a movement destination of the row or the column;
reflect statistical information of a file corresponding to the received row or column of the two-dimensional table in the movement destination and delete the received row or column of the two-dimensional table from the two-dimensional table; and
change an attribute value of the file corresponding to the received row or column of the two-dimensional table to an attribute value of the movement destination.

2. The information processing system according to claim 1, wherein the processor is configured to:
display a confirmation screen for asking the user whether or not to make the change before changing the attribute value of the file corresponding to the row or the column of the two-dimensional table.

3. The information processing system according to claim 1, wherein the processor is configured to:
allow the user to select a file whose attribute value is to be changed from files corresponding to the row or the column of the two-dimensional table.

4. The information processing system according to claim 2, wherein the processor is configured to:
display a content of the file corresponding to the row or the column of the two-dimensional table.

5. The information processing system according to claim 1, wherein the processor is configured to:
select a row or a column having, as a header, an attribute value, whose similarity to an attribute value as a header of a row or a column that is a candidate for attribute value correction is equal to or greater than a predetermined first threshold value, from the two-dimensional table; and
present the selected row or column as a candidate for a movement destination of the row or the column that is the candidate for attribute value correction.

6. The information processing system according to claim 5,
wherein the row or the column that is the candidate for attribute value correction is the row or the column of the two-dimensional table selected by the user.

7. The information processing system according to claim 5, wherein the processor is configured to:
in a case in which the statistical information is the number of files, select the row or the column, in which the number of cells in which the number of files corresponding to the row or the column of the two-dimensional table is 0 is equal to or greater than a predetermined second threshold value, as the column or the row that is the candidate for attribute value correction.

8. A program causing a computer to implement:
a function of displaying statistical information of the file corresponding to the attribute value of the first attribute and the attribute value of the second attribute, in a two-dimensional table in which an attribute value of a first attribute given to a file is used as a header of each row and an attribute value of a second attribute given to the file is used as a header of each column;
a function of receiving a row or a column of the two-dimensional table selected by a user and a movement destination of the row or the column;
a function of reflecting statistical information of a file corresponding to the received row or column of the two-dimensional table in the movement destination and deleting the received row or column of the two-dimensional table from the two-dimensional table; and
a function of changing an attribute value of the file corresponding to the received row or column of the two-dimensional table to an attribute value of the movement destination.

9. An information processing method comprising:
displaying statistical information of the file corresponding to the attribute value of the first attribute and the attribute value of the second attribute, in a two-dimensional table in which an attribute value of a first attribute given to a file is used as a header of each row and an attribute value of a second attribute given to the file is used as a header of each column;
receiving a row or a column of the two-dimensional table selected by a user and a movement destination of the row or the column;
reflecting statistical information of a file corresponding to the received row or column of the two-dimensional table in the movement destination and deleting the received row or column of the two-dimensional table from the two-dimensional table; and
changing an attribute value of the file corresponding to the received row or column of the two-dimensional table to an attribute value of the movement destination.
